# EUROPÄISCHE PATENTSCHRIFT

(11) **EP 2 523 906 B1**
(45) Veröffentlichungstag und Bekanntmachung des Hinweises auf die Patenterteilung: **24.06.2015**
(21) Anmeldenummer: 11757157.0
(22) Anmeldetag: 15.08.2011
(51) Int. Cl.: C01F 7/02, C09K 3/14

(54) **POLYKRISTALLINE AL2O3-KÖRPER AUF BASIS VON GESCHMOLZENEM ALUMINIUMOXID**
POLYCRYSTALLINE AL2O3 BODIES BASED ON MELTED ALUMINUM OXIDE
SOLIDES D'AL2O3 POLYCRISTALLINS À BASE D'OXYDE D'ALUMINIUM FONDU

(30) Priorität: 01.10.2010 DE 102010047095
(43) Veröffentlichungstag der Anmeldung: 21.11.2012
(73) Patentinhaber: Center for Abrasives and Refractories Research & Development C.A.R.R.D. GmbH, 9524 Villach (AT)
(72) Erfinder: SACHSE, Sebastian, A-9500 Villach (AT)
(74) Vertreter: Nash, David Allan
(86) Internationale Anmeldenummer: PCT/EP2011/004089
(87) Internationale Veröffentlichungsnummer: WO 2012/041421

(56) Entgegenhaltungen:
- WO-A1-03/084896
- WO-A1-2007/033787
- US-A- 1 192 709
- US-A- 1 524 134
- US-A- 3 646 713
- US-B1- 6 613 114

## Beschreibung

Die vorliegende Erfindung betrifft polykristalline Al₂O₃-Körper auf Basis von geschmolzenem Aluminiumoxid mit den Merkmalen des Oberbegriffs des Anspruchs 1, ein Verfahren zu ihrer Herstellung sowie ihre Verwendung.

Al₂O₃-Körper auf Basis von geschmolzenem Aluminiumoxid sind bekannt für ihren Einsatz als Schleifkörner zur Herstellung von Schleifmitteln sowie als Ausgangsmaterialien für Feuerfestprodukte. Die Gewinnung der Al₂O₃-Körper erfolgt durch Schmelzen von Aluminiumoxid im elektrischen Lichtbogenofen und anschließende Aufbereitung des über die Schmelze gewonnenen Produktes durch Zerkleinerung und Klassierung zu einer Körnung, die dann für die gewünschte Verwendung eingesetzt werden kann.

Die Herstellung von Al₂O₃-Körpern durch Schmelzen von Aluminiumoxid im elektrischen Lichtbogenofen kann nach unterschiedlichen Verfahren erfolgen. Bei dem sogenannten Blockverfahren wird der aluminiumoxidhaltige Ausgangsstoff sukzessiv aufgeschmolzen, bis das Ofengefäß mit flüssiger Schmelze gefüllt ist. Dann wird der Schmelzprozess unterbrochen und man lässt das geschmolzene Material langsam abkühlen, wobei Korundblöcke mit einem Gewicht bis zu 20 t entstehen, die nach dem vollständigen Abkühlen, was einige Tage dauert, zerkleinert und zur Körnung aufbereitet werden. Aufgrund des langsamen Abkühlens findet bei diesem Verfahren ein starkes Wachstum der Aluminiumoxidkristalle bis zu einem Durchmesser von einigen Zentimetern statt, so dass nach dem Zerkleinern die aufbereiteten Al₂O₃-Körper, deren Durchmesser bevorzugt im Mikro- und Millimeterbereich liegt, als Bruchteile von Primärkristallen vorliegen.

Meist wird heute der Korund jedoch über ein Abgussverfahren hergestellt, bei dem nach dem Aufschmelzen des Ausgangsmaterials der flüssige Korund aus dem Ofengefäß abgegossen wird, wobei in Abhängigkeit von der Gießgeschwindigkeit, der Abgussmenge und der Gefäße, in die abgegossen wird, die flüssige Schmelze unterschiedlich schnell abgekühlt werden kann, wodurch der kristalline Aufbau des Produktes beeinflusst wird. So kann man durch sehr schnelles Abkühlen der flüssigen Schmelze mikrokristallin aufgebaute Al₂O₃-Körper erhalten, die besondere mechanische und schleiftechnische Eigenschaften aufweisen.

In der US 1,192,709 A wird elektrisch geschmolzenes Aluminiumoxid beschrieben, das aus Aluminiumoxidkristallen mit einem mittleren Durchmesser zwischen 10 µm und 300 µm aufgebaut ist und durch Eingießen in schmale Kokillen gewonnen wird. Dabei erstarrt das Material zu kompakten dünnen Platten, die dann zur Schleifkörnung aufbereitet werden können.

In der US 1,524,134 A wird die Herstellung eines feinkristallinen Korundes mit hoher Porosität beschrieben, wobei der Strahl des flüssigen Korundes beim Abgießen mit einem Wasserstrahl abgeschreckt oder in ein Wasserbecken eingegossen wird. Dabei entsteht ein Material mit hoher Porosität, dessen Aluminiumoxidkristalle einen Durchmesser von ca. 130 µm aufweisen. Das Produkt besitzt eine Porosität von mehr als 35 % bei einem Porendurchmesser zwischen 250 µm und 6 mm. Dieses Material ist als Schleifkorn für den groben oder mittleren Bereich nicht geeignet, kann aber nach einer entsprechenden Aufbereitung als Feinkorn oder als Zusatzstoff beispielsweise für Bodenbeläge eingesetzt werden.

In der US 3,646,713 A wird ein Verfahren beschrieben, feinkristallines Material beispielsweise auf Basis von Aluminiumoxid herzustellen, indem man das geschmolzene Metalloxid auf eine wassergekühlte, rotierende Walze gießt, die mit einer zweiten Walze einen engen Spalt bildet, in den das Material eingezogen und dabei weiter abgekühlt und verdichtet wird. Das Produkt ist dicht und besitzt eine Kristallstruktur mit einem Durchmesser der Aluminiumoxidkristalle zwischen 1 µm und 30 µm.

Die US 6,613,114 B1 beschreibt Schleifkörner aus polykristallinem Aluminiumoxid, die aus Kristallen mit einem Durchmesser unter 100 µm bestehen, deren Dichte höher als 97 % der theoretischen Dichte des Aluminiumoxids ist, und die eine Knoophärte größer als 2000 aufweisen. Bei der Herstellung dieses Materials wird geschmolzenes Aluminiumoxid mit einer definierten Gießgeschwindigkeit abgegossen und die Dispersion des Gießstrahls in feine, schnell erstarrende Tröpfchen wird durch die Verwendung von Ultraschall unterstützt. Mit diesem Verfahren gelingt es, dichte Aluminiumoxid-Schleifkörner mit einem mikrokristallinen Gefüge zu halten.

Zusammenfassend kann festgehalten werden, dass man durch Abgießen und schnelles Abschrecken von flüssigem Aluminiumoxid nach den im Stand der Technik beschriebenen Verfahren kompakte und dichte mikrokristalline Al₂O₃-Körper erhalten kann, die für den Einsatz als Schleifkorn geeignet sind. Dazu wird die flüssige Schmelze auf Kühlwalzen, zwischen Kühlplatten oder in Kokillen gegossen, um ein schnelles Abkühlen und Erstarren des schmelzflüssigen Materials zu erreichen und so das Kristallwachstum zu unterbinden.

Parallel dazu hat man auch immer wieder versucht, durch Verblasen des Gießstrahls mittels Pressluft oder Dampf das Abschrecken des schmelzflüssigen Aluminiumoxids zu optimieren, wobei in der Regel jedoch Hohlkugeln mit einem Durchmesser bis zu ca. 5 mm und mehr entstehen, die aufgrund ihrer hohen Porosität und geringen Festigkeit für den Einsatz als Schleifkorn nicht oder nur sehr eingeschränkt geeignet sind.

Schleifmittel werden üblicherweise zur Oberflächenbehandlung von Metall, Holz oder Keramik eingesetzt. In Abhängigkeit davon, welches Material behandelt und welches Ergebnis erzielt werden soll, muss das Schleifmittel sehr unterschiedlichen Anforderungen genügen, was durch Variation der eingesetzten Schleifkörner sowie des Aufbaus des Schleifmittels realisiert wird. So wird beispielsweise bei einer Schleifscheibe, je nach Einsatzzweck, die Korngröße und die Art der Schleifkörner sowie des Binders und die Zusammensetzung und Struktur der Schleifscheibe eingestellt und aufeinander abgestimmt. Dabei werden die Schleifkörner üblicherweise als kompakte und dichte Festkörper eingesetzt, deren Schleifverhalten man durch eine entsprechende Einstellung der Schleifscheibe optimiert, wobei nicht nur Menge und Art des Binders, sondern auch Zusatzstoffe, wie zum Beispiel Schleifhilfsstoffe oder Porenbildner, entsprechend variiert werden.

Als Porenbildner werden Stoffe eingesetzt, die während des Scheibenbrandes zu einem Zeitpunkt, wenn die Schleifscheibe eine ausreichende Festigkeit erreicht hat, verbrennen und dabei einer ihrer Größe entsprechende Pore hinterlassen. Porenbildner sind Stoffe, die sich dazu eignen, Poren gezielt in eine Schleifscheibe einzubringen, wobei die entstehenden Hohlräume die Funktion haben, Späne aufzunehmen und die Zufuhr von Kühlschmierstoff in die Schleifkontaktzone zu erleichtern. Das Porenvolumen einer Schleifscheibe wird über den Korn- und Bindungsanteil bestimmt und durch Zugabe der Porenbildner auf die jeweilige Anwendung abgestimmt. Im Idealfall sollte beim Schleifprozess das Kühlschmiermittel in unmittelbarer Nähe zum Schleifkorn zum Einsatz kommen, was durch den Zusatz von Porenbildnern im Bindungssystem nicht immer auf ideale Weise realisiert werden kann.

Aufgrund der Vielfalt der unterschiedlichen Einsatzgebiete für Schleifmittel ist man in der Schleifmittelindustrie ständig auf der Suche nach neuen, für bestimmte Einsatzgebiete optimierten Schleifkorntypen, durch deren Einsatz sich die entsprechenden Prozesse sowie die resultierenden Produkte verbessern lassen.

Die Aufgabe der vorliegenden Erfindung besteht darin, einen neuen Typ von Schleifkorn zur Verfügung zu stellen, der für bestimmte Schleifanwendungen Vorteile gegenüber dem Stand der Technik aufweist.

Gelöst wird diese Aufgabe durch polykristalline Al₂O₃-Körper auf der Basis von geschmolzenem Aluminiumoxid mit den Merkmalen des Anspruchs 1.

Aufgabe der vorliegenden Erfindung ist es auch, ein entsprechendes Verfahren zur Herstellung derartiger Al₂O₃-Körper zur Verfügung zu stellen.

Gelöst wird diese Aufgabe durch ein Verfahren mit den Merkmalen des Anspruchs 5.

Weiterbildungen und Ausgestaltungen des Erfindungsgedankens sind Gegenstand der jeweiligen Unteransprüche.

Im Rahmen der vorliegenden Arbeiten wurde gefunden, dass polykristalline Al₂O₃-Körper auf Basis von geschmolzenem Aluminiumoxid mit einer definierten geschlossenen Porosität zwischen 10 Vol.-% und 30 Vol.-%, einem Anteil an α-Aluminiumoxid von mehr als 98 Gew.-% und einem Aufbau aus einer Vielzahl von Al₂O₃-Primärkristallen mit einer Kristallgröße zwischen 20 µm und 100 µm durch Schmelzen von Aluminiumoxid im elektrischen Lichtbogenofen, Abgießen der flüssigen Aluminiumoxidschmelze mit einer konstanten Gießleistung von weniger als 80 kg/min, Impfen des Gießstroms der flüssigen Schmelze mit Impfkristallen aus α- und/oder γ-Aluminiumoxid mit einer mittleren Korngröße von 50 µm bis 90 µm, schnelles Abkühlen der Schmelze, um ein Aluminiumoxidfestkörper zu erhalten, und anschließendes Zerkleinern und Klassieren des Aluminiumoxidfestkörpers erhalten werden können. Die so hergestellten polykristallinen Al₂O₃-Körper zeichnen sich durch eine geschlossene Makroporosität mit einem Porenvolumen zwischen 10 und 30 Vol.-% aus, wobei der mittlere Durchmesser der Poren zwischen 10 µm und 100 µm und der maximale Durchmesser bei ca. 120 µm liegen.

Bei einer bevorzugten Ausführungsform der Al₂O₃-Körper weisen die Primärkristalle eine Größe zwischen 30 µm und 60 µm auf und der Anteil an Aluminiumoxid beträgt vorzugsweise mehr als 99,5 Gew.-%.

Die Porenform entspricht dem Gefügehohlraum zwischen den aneinandergrenzenden und fest miteinander verbundenen Einzelkristallen, die vorzugsweise eine pseudokubische Form aufweisen.

Bei einer vorteilhaften Ausgestaltung des Verfahrens erfolgt das Abgießen der Schmelze mit einer konstanten Gießleistung von weniger als 40 kg/min. Das Impfen des Gießstroms kann durch direktes Einblasen der Aluminiumoxidimpfkristalle in den Gießstrom erfolgen, wobei die Menge der Impfkristalle bevorzugt zwischen 5 und 20 Gew.-%, bezogen auf die Menge an abgegossenem Aluminiumoxid, beträgt.

Das Abkühlen der Schmelze kann auf unterschiedliche Art erfolgen. So haben die vorliegenden Versuche gezeigt, dass die bekannten Verfahren zum Abschrecken von Metalloxidschmelzen, wie zum Beispiel das Abkühlen der Schmelze über gekühlte Walzen, durch Eingießen zwischen Kühlplatten aus Metall oder durch Abgießen auf Kühlplatten, erfolgreich eingesetzt werden können.

Auf diese Weise können Schleifkörner mit einer definierten Porosität und einem definierten kristallinen Gefüge erhalten werden.

Insbesondere beim Einsatz in Schleifscheiben, die eine definierte Porosität aufweisen sollen, führt die Verwendung der erfindungsgemäßen Schleifkörner zu Verbesserungen gegenüber dem Stand der Technik, da nun zumindest teilweise auf das zusätzliche Einbringen von Porenbildnern verzichtet werden kann. Beim Einsatz der erfindungsgemäßen Schleifkörner wird die Porosität der Schleifscheibe nun zumindest teilweise durch das Schleifkorn selbst ausgebildet, was den zusätzlichen Vorteil mit sich bringt, dass das Kühlschmiermittel direkt in die Schleifkontaktzone gebracht wird. So wird durch das Einbringen zusätzlicher Porosität bei Verwendung des erfindungsgemäßen Schleifkorns einerseits die Schnittigkeit der Schleifscheibe verbessert und das Freischleifen während des Arbeitsprozesses unterstützt, andererseits wird darüber hinaus aufgrund der mikrokristallinen Struktur mit einer großen, zerklüfteten Oberfläche die Einbindung des Schleifkorns in der Schleifscheibe verbessert, wodurch die Schleifleistungen erhöht werden können.

Trotz der hohen Makroporosität ist das Schleifkorn äußerst stabil und kann auch für Schleifanwendungen eingesetzt werden, bei denen hohe Anpressdrücke gefahren werden.

Auch wenn die polykristallinen Al₂O₃-Körper aufgrund ihres Aufbaus insbesondere für den Einsatz in Schleifscheiben prädestiniert sind, so sind sie auch für die Verwendung als loses Schleifmittel, in Schleifmitteln auf Unterlage oder für die Herstellung von Feuerfestmaterialien geeignet.

Im Folgenden wird die vorliegende Erfindung anhand von ausgesuchten Beispielen und Figuren ausführlich erläutert. Dabei zeigen
- Figur 1: ein Kontrastbild eines Anschliffs eines Grobkorns,
- Figur 2: eine rasterelektronenmikroskopische Aufnahme von erfindungsgemäßen Schleifkörnern in einer 150-fachen Vergrößerung,
- Figur 3: eine rasterelektronenmikroskopische Aufnahme eines Schleifkorns nach dem Stand der Technik ebenfalls in 150-facher Vergrößerung,
- Figur 4: eine rasterelektronenmikroskopische Aufnahme eines Ausschnitts eines zwischen Kühlwalzen abgegossenen und erstarrten Aluminiumoxidfestkörpers in 200-facher Vergrößerung,
- Figur 5: ein Diagramm für einen Schleifprozess, bei dem die Normalkraft Fₙ gegen das Zerspanvolumen V'_{w} aufgetragen ist,
- Figur 6: ein Diagramm für einen Schleifprozess, bei dem die Normalkraft Fₙ gegen das Zeitspanvolumen Q'_{w} aufgetragen ist,
- Figur 7: ein Diagramm für einen Schleifprozess, bei dem die Spindelleistung P_{c} gegen das Zeitspanvolumen Q'_{w} aufgetragen ist, und
- Figur 8: ein Diagramm für einen Schleifprozess, bei dem der Quotient aus Tangentialkraft F_{T} und Normalkraft Fₙ gegen das Zerspanvolumen V'_{w} aufgetragen ist.

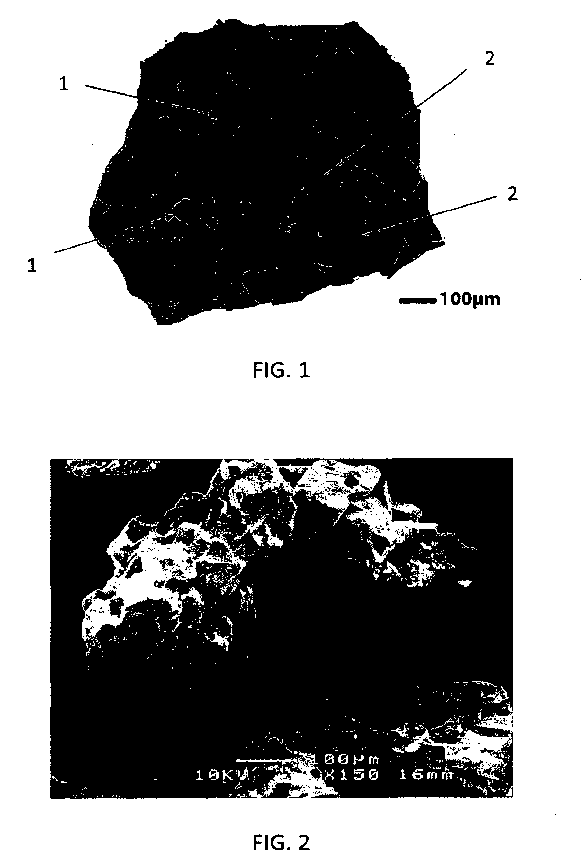

Die Figur 1 zeigt ein Kontrastbild eines Anschliffs eines relativ groben polykristallinen Al₂O₃-Körpers mit einem Durchmesser von ca. 900 µm. Dabei geben die dunklen Bereiche die Poren wieder, während die hellen Bereiche die einzelnen Aluminiumoxid-Primärkristalle abbilden. Anhand solcher Kontrastbilder lässt sich die Porosität des Schleifkorns über eine Bildanalyse ermitteln, wobei die dunklen Bereiche ins Verhältnis zu den hellen Bereichen gesetzt werden. Für das vorliegende Beispiel wurde eine Makroporosität von 15 bis 20 Vol.-% ermittelt.

Die Figur 2 zeigt eine rasterelektronenmikroskopische Aufnahme polykristalliner Schleifkörner auf Basis von geschmolzenem Aluminiumoxid in 150-facher Vergrößerung. In der Figur ist zu erkennen, dass die Aluminiumoxid-Primärkristalle eine Kristallgröße unter 100 µm aufweisen, wobei der Kristallverbund als eine Art Schleifkornagglomerat ausgebildet ist mit zwischen den Primärkristallen angeordneten Makroporen. Die Form der Makroporen ist durch die Kristallebenen der Primärkristalle geprägt. Trotz der Makroporen bilden die Primärkristalle untereinander einen relativ kompakten Verbund, der eine hohe Kornfestigkeit zeigt.

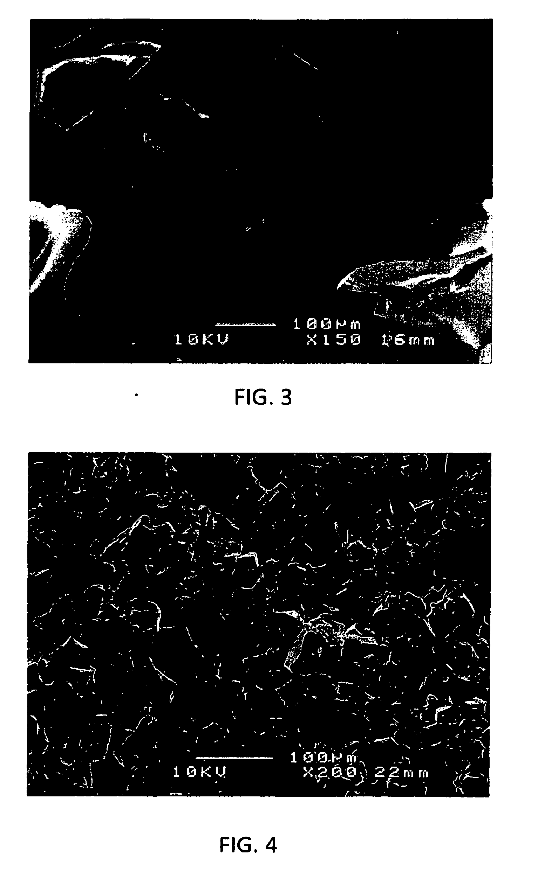

Zum Vergleich dazu ist in der Abbildung 3 ein Korund-Schleifkorn nach dem Stand der Technik dargestellt, wobei der flüssige Korund nicht abgeschreckt wurde, sondern langsam erstarrt ist. Bei diesem Schleifkorn handelt es sich um ein Bruchstück eines großen Primärkristalls, das bei der Aufbereitung des erstarrten Korundblockes zur Schleifkörnung entstanden ist. Vergleicht man die Figuren 2 und 3 miteinander, die jeweils Schleifkörner mit vergleichbarer Größe zeigen, so ist allein aufgrund des unterschiedlichen Aufbaus auch ein unterschiedliches Schleifverhalten zu erwarten. Während das kompakte Schleifkorn nach dem Stand der Technik bei einer Schleifoperation bis zu einem bestimmten Druck standhält und dann unkontrolliert zusammenbricht, sobald diese Grenze überschritten wird, wird beim erfindungsgemäßen mikrokristallinen Schleifkorn der Bruch entlang der Kristallgrenzen erfolgen, wobei dann nicht nur neue Schneidkanten gebildet, sondern auch Poren freigesetzt werden, wodurch der Schleifprozess insgesamt begünstigt wird.

Die Figur 4 zeigt eine elektronenmikroskopische Aufnahme eines Ausschnitts eines abgeschreckten Korundplättchens, das beim Eingießen einer flüssigen Aluminiumoxidschmelze zwischen wassergekühlte Metallwalzen entstanden ist. Bei dieser Darstellung ist die für die erfindungsgemäßen Al₂O₃-Körper typische pseudokubische Kristallform der Aluminiumoxid-Primärkristalle zu erkennen, wobei die mittlere Primärkristallgröße zwischen 30 µm und 60 µm liegt.

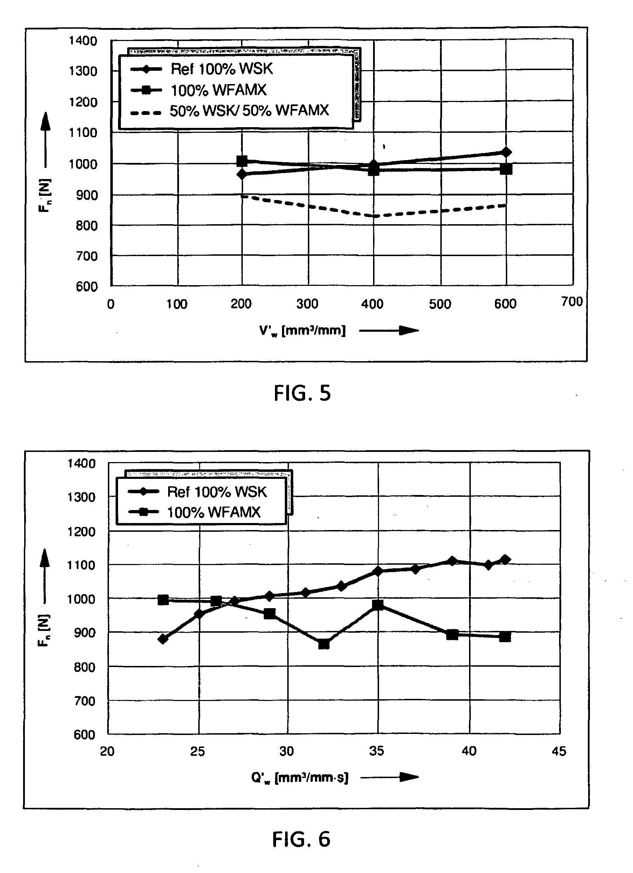

Die Figuren 5 bis 8 beziehen sich auf die im Folgenden beschriebenen Schleiftests und werden in diesem Zusammenhang im Einzelnen ausführlich erläutert. Die Schleiftests wurden im Auftrag der Anmelderin am Institut für Werkzeugmaschinen und Fertigungstechnik (IWF) der Technischen Universität Braunschweig durchgeführt.

### Beispiel 1

### Herstellung einer Schleifkörnung F60

Zur Herstellung einer Schleifkörnung F60 wurde Tonerde im elektrischen Lichtbogenofen bei einer Spannung von 100 V aufgeschmolzen. Die flüssige Schmelze wurde mit einer Gießgeschwindigkeit von 30 kg/min auf zwei gegeneinander rotierende wassergekühlte Walzen abgegossen, wobei die Schmelze auf die äußere Oberfläche einer von ihrer Innenseite her gekühlten Kühlwalze gegossen und mit der rotierenden Walze in einen zwischen den beiden Kühlwalzen gebildeten Spalt mit einer Spaltbreite von ca. 1 mm eingezogen wurde. Während des Gießvorgangs wurden ca. 10 Gew.-%, bezogen die Gießmenge, α-Al₂O₃-Kristallisationskeime mit einem mittleren Partikeldurchmesser von 50 µm in den Gießstrahl eingeblasen. Das so erhaltene abgeschreckte polykristalline plattenförmige Material wurde zerkleinert, um polykristalline Al₂O₃-Körper zu erhalten, die dann durch Aussieben zu einer Schleifkörnung F60 nach FEPA mit einer mittleren Partikelgröße von ca. 260 µm klassiert wurden.

Für die im Folgenden beschriebenen schleiftechnischen Untersuchungen des Schleifkorns wird das so gewonnene Schleifkorn mit der Typenbezeichnung WFAMX bezeichnet.

### Beispiel 2

### Schleiftest (Flachschleifen/Tiefschleifen)

Eine nach Beispiel 1 erhaltene Schleifkörnung F60 wurde für die Herstellung von keramisch gebundenen Schleifscheiben verwendet, die dann zum Flachschleifen/Tiefschleifen mit hoher Zustellung und geringer Schnittgeschwindigkeit am Werkstoff Inconel 718 eingesetzt wurden. Gekühlt wurde mit 5 % HYSOL RD (Fa. Castrol), wobei 200 1 Kühlschmierstoff pro Minute eingesetzt wurden. Verglichen wurde eine Standardscheibe mit einem konventionellen Schmelzkorund (Alodur® WSK F60, Treibacher Schleifmittel GmbH) mit einer Scheibe, bei der 50 % des Standardmaterials durch WFAMX F60 (erfindungsgemäßes Schleifkorn) sowie einer Scheibe bei der 100 % des Standardmaterials durch WFAMX ersetzt worden war. Gemessen wurden die Normalkräfte Fₙ [N] in Abhängigkeit vom Zerspanvolumen V'_{w} [mm³/mm].

Im Folgenden sind die Prozessparameter sowie die unterschiedlichen Scheibenzusammensetzungen festgehalten:

| | |
|---|---|
| **Schleifprozess:** | Flachschleifen (Tiefschleifen) |
| | |
| **Schleifscheibe:** | keramisch gebunden (Härte H) |
| | Muster 1: 100 % WSK F60 |
| | Muster 2: 100 % WFAMX F60 |
| | Muster 3: 50 % WSK F60 / 50 % WFAMX F60 |

| | |
|---|---|
| **Werkstoff:** | Inconel 718 |
| | |
| **Kühlschmierstoff:** | 200 l/min 5 % HYSOL RD (Castrol) |
| | |
| **Zustellung (aₑ) :** | 2.0 mm |
| **Gesamtzustellung (aₚ) :** | 15 mm |
| **Zeitspanvolumen (Q'_{w}):** | 20 mm³/mm·s |
| **Schnittgeschwindigkeit (V_{c}) :** | 25 m/s |
| | |
| **Abrichtzustellung (a_{ed}) :** | 0.015 mm |
| **Überdeckungsgrad (U_{d}):** | 3 |
| **Zahl der Abrichtzyklen (n):** | 10 |

Das in der Figur 5 wiedergegebene Diagramm zeigt die Entwicklung der Normalkraft Fₙ mit steigendem Zerspanvolumen V'_{w} für die drei unterschiedliche Scheiben im Direktvergleich. Während beim Muster 1 (Vergleich), bei dem 100 % Standardschleifkorn WSK eingesetzt wurde, ein stetiger Anstieg der Normalkraft zu beobachten ist, ist bei dem Muster 2, bei dem das Standardkorn WSK durch 100 % WFAMX ersetzt wurde, ein leichter Abfall der Normalkraft mit steigendem Zerspanvolumen V'_{w} zu erkennen, wobei die Normalkraft Fₙ bei einem Zerspanvolumen V'_{w} von 600 [mm³/mm] auf einen Wert unter den kritischen Wert von 1000 [N] abfällt. Generell sind niedrigere Schleifkräfte mit einer höheren Schnittigkeit und einem kühleren Schliff verbunden, wobei aufgrund der sich beim Schleifprozess entwickelnden niedrigeren Temperaturen die Gefahr einer Werkstückschädigung durch temperaturbedingte Verfärbungen verringert wird, was für den Anwender beim Präzisionsschleifen von großer Bedeutung ist, da durch Temperatur geschädigte Werkstücke irreparabel als Ausschuss aussortiert werden müssen.

Das Muster 3, bei dem eine Mischung von 50 % des Standardmaterials WSK mit 50 % des erfindungsgemäßen Schleifkorns WFAMX eingesetzt wurde, zeigt einen besonders günstigen Kraftverlauf der Normalkraft Fₙ. Die sich bei Prozess entwickelnden Kräfte liegen deutlich unter denen der Muster 1 und 2, wobei die Normalkraft Fₙ selbst bei einem Zerspanvolumen V'_{w} von 600 [mm³/mm] noch unter 900 [N] liegt. In diesem Fall ist die Gefahr eines Schleifbrandes bei gleich bleibender Abtragsleistung stark verringert, was für den Anwender enorme Vorteile mit sich bringt.

### Beispiel 3

### Schleiftest Flachschleifen/Tiefschleifen (Leistungsgrenze)

Wie in Beispiel 2 wurde eine nach Beispiel 1 erhaltene Schleifkörnung F60 für die Herstellung von keramisch gebundenen Schleifscheiben verwendet, die dann zum Flachschleifen/Tiefschleifen am Werkstoff Inconel 718 eingesetzt wurden. Verglichen wurde eine Standardscheibe mit einem konventionellen Schmelzkorund (Alodur® WSK F60, Treibacher Schleifmittel GmbH) mit einer Scheibe, bei der 100 % des Standardmaterials durch WFAMX F60 ersetzt worden war. Gemessen wurden die Normalkräfte Fₙ [N] bei vorgegebenen Zerspanvolumen V'_{w} von 100 [mm³/mm] in Abhängigkeit vom Zeitspanvolumen Q'_{w} [mm³/mm·s]. Der Test wurde in diesem Fall bis zur Leistungsgrenze der jeweiligen Schleifscheiben durchgeführt. Die Leistungsgrenze ist beim Auftreten von Schleifbrand erreicht und wird durch stärker werdende Schleifgeräusche (das sogenannte "Rattern") angekündigt.

Im Folgenden sind die Prozessparameter sowie die unterschiedlichen Scheibenzusammensetzungen festgehalten:

| | |
|---|---|
| **Schleifprozess:** | Flachschleifen (Tiefschleifen) |
| | |
| **Schleifscheibe:** | keramisch gebunden (Härte H) |
| | Muster 1: 100 % WSK F60 |
| | Muster 2: 100 % WFAMX F60 |
| | |
| **Werkstoff:** | Inconel 718 |
| | |
| **Kühlschmierstoff:** | 200 l/min 5 % HYSOL RD (Castrol) |
| | |
| **Zustellung (aₑ) :** | 1.0 mm |
| **Gesamtzustellung (aₚ) :** | 15 mm |
| **Zerspanvolumen (V'_{w}) :** | 100 mm³/mm |
| **Schnittgeschwindigkeit (V_{c}):** | 25 m/s |
| | |
| **Abrichtzustellung (a_{ed}) :** | 0.015 mm |
| **Überdeckungsgrad (U_{d}):** | 3 |
| **Zahl der Abrichtzyklen (n):** | 10 |

Die beim Schleiftest gemessenen Ergebnisse sind in der Figur 5 graphisch wiedergegeben. Im Gegensatz zum vorangegangenen Test (Beispiel 2) wurden in diesem Fall die Schleifscheiben (Muster 1, Muster 2) bis zu ihrer Leistungsgrenze getestet, wobei bei einem vorgegebenen Zerspanvolumen V'_{w} von 100 [mm³/mm] der Verlauf der Normalkraft Fₙ mit steigendem Zeitspanvolumen Q'_{w} festgehalten wurde. Während die Vergleichsscheibe mit 100 % Standardkorn WSK (Muster 1) bereits bei einem Zeitspanvolumen Q'_{w} von 30 [mm³/mm·s] hohe Normalkräfte entwickelt, die über 1000 [N] liegen, zeigt die Scheibe mit 100 % WFAMX (Muster 2) zwar bei niedrigem Zeitspanvolumen Q'_{w} einen relativ hohen Wert für die Normalkraft Fₙ, die aber dann - quasi nach einer kurzen Anlaufphase - mit steigendem Zeitspanvolumen Q'_{w} abfällt und bei einem Zeitspanvolumen Q'_{w} von 42.5 [mm³/mm·s] sogar unter 900 [N] liegt, so dass mit einer derartigen Schleifscheibe selbst bei hoher Belastung die Gefahr eines Schleifbrandes gering ist.

### Beispiel 4

### Schleiftest Flachschleifen/Tiefschleifen (Leistungsgrenze)

Für identische Scheiben wie in Beispiel 3 mit jeweils 100 % WSK F60 bzw. WFAMX F60 wurde unter den gleichen Bedingungen die Spindelleistung P_{c} [kW] bei einem vorgegebenen Zerspanvolumen V'_{w} von 100 [mm³/mm] in Abhängigkeit vom Zeitspanvolumen Q'_{w} [mm³/mm·s] bestimmt.

Im Folgenden sind die Prozessparameter sowie die unterschiedlichen Scheibenzusammensetzungen festgehalten:

| | |
|---|---|
| **Schleifprozess:** | Flachschleifen (Tiefschleifen) |
| | |
| **Schleifscheibe:** | keramisch gebunden (Härte H) |
| | Muster 1: 100 % WSK F60 |
| | Muster 2: 100 % WFAMX F60 |
| | |
| **Werkstoff:** | Inconel 718 |
| | |
| **Kühlschmierstoff:** | 200 l/min 5 % HYSOL RD (Castrol) |
| | |
| **Zustellung (aₑ) :** | 1.0 mm |
| **Gesamtzustellung (aₚ):** | 15 mm |
| **Zerspanvolumen (V'_{w}):** | 100 mm³/mm |
| **Schnittgeschwindigkeit (V_{c}):** | 25 m/s |

| | |
|---|---|
| **Abrichtzustellung (a_{ed}) :** | 0.015 mm |
| **Überdeckungsgrad (U_{d}) :** | 3 |
| **Zahl der Abrichtzyklen (n):** | 10 |

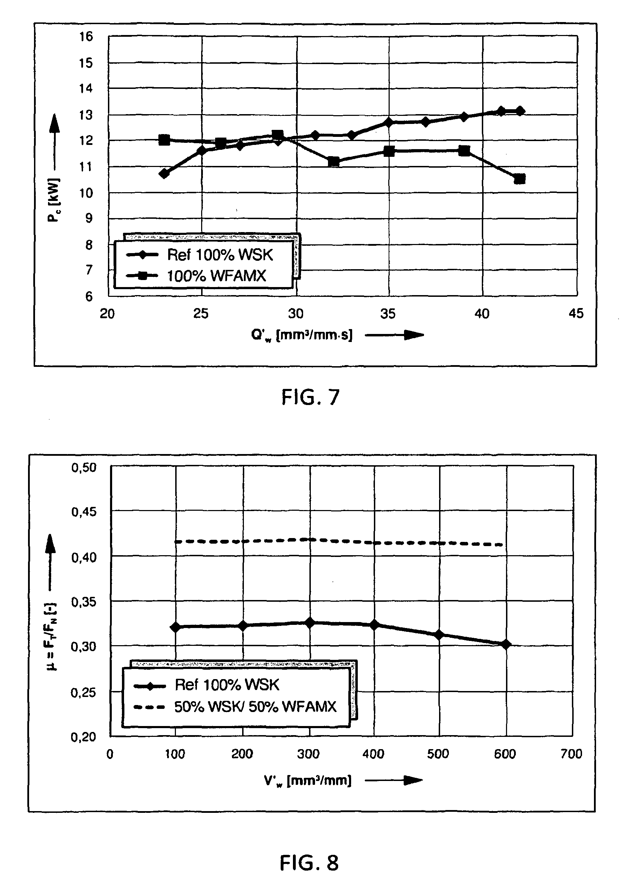

Das in der Figur 7 wiedergegebene Diagramm, bei dem die Leistungsaufnahme der Spindel P_{c} mit steigendem Zeitspanvolumen Q'_{w} für die Scheiben gemäß Muster 1 und Muster 2 wiedergegeben ist, bestätigt den bereits in Beispiel 4 aufgezeigten Trend. So steigt die Spindelleistung P_{c} für die Standardscheibe mit 100 % WSK kontinuierlich an und erreicht bei einem Zeitspanvolumen Q'_{w} von 42.5 [mm³/mm·s] einen Wert von über 13 [kW], während die Spindel bei der Scheibe mit 100 % WFAMX (erfindungsgemäßes Schleifkorn) bei gleichen Bedingungen bei einem Zeitspanvolumen von 42.5 [mm³/mm·s] eine Leistungsaufnahme von weniger als 11 [kW] zeigt.

Eine geringe Leistungsaufnahme der Spindel indiziert eine hohe Schnittigkeit der Scheibe und einen kühlen Schliff und damit eine geringe Anfälligkeit des Prozesses für Schleifbrand.

### Beispiel 5

### Schleiftest Flachschleifen/Tiefschleifen

Wie in Beispiel 2 wurde eine nach Beispiel 1 erhaltene Schleifkörnung F60 für die Herstellung von keramisch gebundenen Schleifscheiben verwendet, die dann zum Flachschleifen/Tiefschleifen am Werkstoff Inconel 718 eingesetzt wurden. Verglichen wurde eine Standardscheibe mit 100 % konventionellem Schmelzkorund (Alodur® WSK F60, Treibacher Schleifmittel GmbH) mit einer Scheibe, bei der 50 % des Standardmaterials durch WFAMX F60 ersetzt worden waren. Gemessen wurden die Quotienten µ aus den Tangentialkräften F_{T} und den Normalkräften Fₙ [N] in Abhängigkeit vom Zerspanvolumen N'_{w} [mm³/mm].

Im Folgenden sind die Prozessparameter sowie die unterschiedlichen Scheibenzusammensetzungen festgehalten:

| | |
|---|---|
| **Schleifprozess:** | Flachschleifen (Tiefschleifen) |
| | |
| **Schleifscheibe:** | keramisch gebunden (Härte H) |
| | Muster 1: 100 % WSK F60 |
| | Muster 2: 100 % WFAMX F60 |
| | |
| **Werkstoff:** | Inconel 718 |
| | |
| **Kühlschmierstoff:** | 200 l/min 5 % HYSOL RD (Castrol) |
| | |
| **Zustellung (aₑ) :** | 1.0 mm |
| **Gesamtzustellung (aₚ) :** | 15 mm |
| **Zeitspanvolumen (Q'_{w}) :** | 20 mm³/mm·s |
| **Schnittgeschwindigkeit (V_{c}):** | 25 m/s |
| | |
| **Abrichtzustellung (a_{ed}) :** | 0.015 mm |
| **Überdeckungsgrad (U_{d}) :** | 3 |
| **Zahl der Abrichtzyklen (n):** | 10 |

Bei dem in Figur 8 gezeigten Diagramm wurde der Quotient µ aus Tangentialkraft F_{T} und Normalkraft Fₙ mit steigendem Zerspanvolumen V'_{w} aufgetragen. Je höher dieser Wert ist, umso besser ist in der Regel das Schleifverhalten der Scheibe zu bewerten, da ein hoher Quotient µ auf eine geringe Normalkraft Fₙ hindeutet. Im vorliegenden Fall ist festzustellen, dass für das Muster 3 (50 % WSK + 50 % WFAMX) ein konstant hoher Wert erreicht wird, der zusätzlich durch eine relativ hohe Tangentialkraft F_{T} positiv beeinflusst wird, was neben der hohen Schnittigkeit und dem kühlen Schliff eine gute Profilhaltigkeit der Schleifscheibe erwarten lässt.

Auch wenn sich die Beispiele 1 bis 5 ausschließlich auf das Flachschleifen/Tiefschleifen (Präzisionsschleifen) von Inconel 718 beziehen, so ist darin auf keinen Fall eine Einschränkung zu sehen. Diese Versuchsreihe wurde ausgewählt, weil sich hier die Vorteile der erfindungsgemäßen Al₂O₃-Körper auf Basis von geschmolzenem Aluminiumoxid als Schleifkörner besonders gut aufzeigen lassen. Inconel ist ein hochempfindlicher Turbinenwerkstoff, der mit hohen Abtragsraten bearbeitet wurde, so dass die Testreihen eine hohe positive Aussagekraft in Bezug auf die allgemeine Brauchbarkeit der erfindungsgemäßen Al₂O₃-Körper als Schleifkörner haben.

Aufgrund ihres Gefüges und ihrer Kristallstruktur bei gleichzeitig hoher Festigkeit können die erfindungsgemäßen polykristallinen Al₂O₃-Körper vorteilhaft auch für andere Schleifoperationen als gebundene oder lose Schleifmittel sowie in Schleifmitteln auf Unterlage eingesetzt werden. Ebenso sind sie gut geeignet für den Einsatz in speziellen Feuerfestprodukten.

## Patentansprüche

1. Polykristalline Al₂O₃-Körper auf Basis von geschmolzenem Aluminiumoxid mit einem Anteil an α-Aluminiumoxid von mehr als 98 Gew.-%, aufgebaut aus einer Vielzahl von Al₂O₃-Primärkristallen mit einer Kristallitgröße zwischen 20 µm und 100 µm,
**dadurch gekennzeichnet, dass** die Al₂O₃-Körper eine geschlossene Makroporosität mit einem Porenvolumen zwischen 10 Vol.-% und 30 Vol.-% aufweisen, wobei der mittlere Durchmesser der Poren zwischen 10 µm und 100 µm und der maximale Porendurchmesser im Bereich von ca. 120 µm liegt.

2. Al₂O₃-Körper nach Anspruch 1,
**dadurch gekennzeichnet, dass** die Primärkristalle eine Größe zwischen 30 µm und 60 µm aufweisen,

3. Al₂O₃-Körper nach Anspruch 1 oder 2,
**dadurch gekennzeichnet, dass** der Anteil an α-Aluminiumoxid mehr als 99,5 Gew.-% beträgt.

4. Al₂O₃-Körper nach einem der Ansprüche 1 bis 3,
**dadurch gekennzeichnet, dass** die Primärkristalle eine pseudokubische Kristallform aufweisen.

5. Verfahren zur Herstellung von polykristallinen Al₂O₃-Körpern auf Basis von elektrisch geschmolzenem Aluminiumoxid mit den Schritten
a) Schmelzen von Aluminiumoxid im elektrischen Lichtbogenofen,
b) Abgießen der flüssigen Aluminiumoxid-Schmelze mit einer konstanten Gießleistung von weniger als 80 kg/min
c) Impfen des Gießstroms der flüssigen Schmelze mit Impfkristallen aus α- und/oder γ-Aluminiumoxid mit einem mittleren Teilchendurchmesser d₅₀ von 50 µm bis 90 µm,
d) Abkühlen der flüssigen Schmelze, um einen Aluminiumoxidfestkörper zu erhalten, und
e) Zerkleinern des Aluminiumoxidfestkörpers, um polykristalline Al₂O₃-Körper nach einem der Ansprüche 1 bis 4 zu erhalten.

6. Verfahren nach Anspruch 5,
**dadurch gekennzeichnet, dass** das Abgießen der Schmelze mit einer konstanten Gießleistung von weniger als 40 kg/min erfolgt.

7. Verfahren nach Anspruch 5 oder 6,
**dadurch gekennzeichnet, dass** das Impfen des Gießstroms durch direktes Einblasen der Aluminiumoxid-Impfkristalle in den Gießstrom erfolgt.

8. Verfahren nach einem der Ansprüche 5 bis 7,
**dadurch gekennzeichnet, dass** die Menge der Impfkristalle zwischen 5 Gew.-% und 20 Gew.-%, bezogen auf die Menge an geschmolzenem Aluminiumoxid, beträgt.

9. Verfahren nach einem der Ansprüche 5 bis 8,
**dadurch gekennzeichnet, dass** das Abkühlen der Schmelze über wassergekühlte Walzen, durch Eingießen der Schmelze zwischen Kühlplatten aus Metall oder durch Abgießen der Schmelze auf Kühlplatten erfolgt.

10. Verwendung der polykristallinen Al₂O₃-Körper nach einem der Ansprüche 1 bis 4 für die Herstellung von Schleifmitteln und/oder Feuerfestmaterialien.

## Claims

1. Polycrystalline Al₂O₃ bodies on the basis of molten aluminium oxide with an α-aluminium oxide ratio of more than 98 wt.-%, formed of a plurality of Al₂O₃ primary crystals with a crystallite size between 20 µm and 100 µm,
**characterised in that**
the Al₂O₃ bodies have a closed macroporosity with a pore volume between 10 vol.-% and 30 vol.-%, wherein the mean diameter of the pores is between 10 µm and 100 µm and the maximum pore diameter is in the region of about 120 µm.

2. Al₂O₃ bodies according to claim 1,
**characterised in that**
the primary crystals have a size between 30 µm and 60 µm.

3. Al₂O₃ bodies according to claim 1 or 2,
**characterised in that**
the α-aluminium oxide ratio is greater than 99.5 wt.-%.

4. Al₂O₃ bodies according to one of claims claim 1 to 3,
**characterised in that**
the primary crystals have a pseudocubic crystal shape.

5. Process for producing polycrystalline Al₂O₃ bodies on the basis of electrically molten aluminium oxide with the steps
a) melting of aluminium oxide in an electric arc-furnace,
b) tapping out the liquid aluminium oxide melt at a constant tapping rate of less than 80 kg/min
c) seeding the pouring stream of the liquid melt with seed crystals of α- and/or γ-aluminium oxide with a mean particle diameter d₅₀ of 50 µm to 90 µm,
d) cooling of the liquid melt to obtain an aluminium oxide solid body, and
e) fragmenting the aluminium oxide solid body to obtain an Al₂O₃ body according to one of claims 1 to 4.

6. Process according to claim 5,
**characterised in that**
the tapping out of the melt occurs at a constant tapping rate of less than 40 kg/min.

7. Process according to claim 5 or 6,
**characterised in that**
the seeding of the pouring stream occurs by direct blowing of the aluminium oxide seed crystals into the pouring stream.

8. Process according to one of claims 5 to 7,
**characterised in that**
the amount of seed crystals is between 5 wt.-% and 20 wt.-% on the basis of the amount of molten aluminium oxide.

9. Process according to one of claims 5 to 8,
**characterised in that**
the cooling of the melt occurs by water cooled rolls by pouring of the melt between metal cooling plates or by tapping out the melt onto cooling plates.

10. Use of the polyucrystalline Al₂O₃ bodies according to one of claims 1 to 4 in the production of abrasive materials and/or refractory products.

## Revendications

1. Corps en Al₂O₃ polycristallins à base d'oxyde d'aluminium fondu avec une proportion d'oxyde d'α-aluminium de plus de 98 % en poids, constitués d'une pluralité de cristaux primaires d'Al₂O₃ avec une taille de cristallites comprise entre 20 µm et 100 µm,
**caractérisés en ce que**
les corps en Al₂O₃ présentent une macroporosité fermée avec un volume de pores compris entre 10 % en vol. et 30 % en vol., dans lequel le diamètre moyen des pores est compris entre 10 µm et 100 µm et le diamètre maximal de pores se situe dans la région d'environ 120 µm.

2. Corps en Al₂O₃ selon la revendication 1,
**caractérisés en ce que**
les cristaux primaires présentent une taille comprise entre 30 µm et 60 µm.

3. Corps en Al₂O₃ selon la revendication 1 ou 2,
**caractérisés en ce que**
la proportion en oxyde d'α-aluminium se monte à plus de 99,5 % en poids.

4. Corps en Al₂O₃ selon une des revendications 1 à 3,
**caractérisés en ce que**
les cristaux primaires présentent une forme de cristaux pseudo-cubique.

5. Procédé de fabrication de corps en Al₂O₃ polycristallins à base d'oxyde d'aluminium fondu électriquement avec les étapes
a) fonte d'oxyde d'aluminium dans le four à arc électrique,
b) coulée de la masse fondue d'oxyde d'aluminium liquide avec une puissance de coulée constante de moins de 80 kg/min,
c) inoculation du courant de coulée de la masse fondue liquide avec des germes en oxyde d'α- et/ou γ-aluminium avec un diamètre particulaire moyen d₅₀ de 50 µm à 90 µm,
d) refroidissement de la masse fondue liquide pour obtenir un corps solide d'oxyde d'aluminium, et
e) broyage du corps solide d'oxyde d'aluminium pour obtenir des corps en Al₂O₃ polycristallins selon une des revendications 1 à 4.

6. Procédé selon la revendication 5,
**caractérisé en ce que**
la coulée de la masse fondue s'effectue avec une puissance de coulée constante de moins de 40 kg/min.

7. Procédé selon la revendication 5 ou 6.
**caractérisé en ce que**
l'inoculation du courant de coulée s'effectue par insufflation directe des germes d'oxyde d'aluminium dans le courant de coulée.

8. Procédé selon une des revendications 5 à 7,
**caractérisé en ce que**
la quantité de germes est comprise entre 5 % en poids et 20 % en poids, par rapport à la quantité d'oxyde d'aluminium fondu.

9. Procédé selon une des revendications 5 à 8,
**caractérisé en ce que**
le refroidissement de la masse fondue s'effectue par le biais de rouleaux refroidis à l'eau, par versage de la masse fondue entre des plaques de refroidissement en métal ou par coulée de la masse fondue sur des plaques de refroidissement.

10. Utilisation des corps en Al₂O₃ polycristallins selon une des revendications 1 à 4 pour la fabrication d'abrasifs et/ou de matériaux ignifuges.
